# EUROPEAN PATENT APPLICATION

(11) **EP 2 950 485 A1**
(43) Date of publication of application: **02.12.2015**
(21) Application number: 14382198.1
(22) Date of filing: 29.05.2014
(51) Int. Cl.: H04L 12/58

(54) **Method for improving a messaging service in a communication network**

(71) Applicant: Telefonica S.A., 28013 Madrid (ES)
(72) Inventor: Roch, Yotam, 28013 Madrid (ES); Neystadt, John (Eugene), 28013 Madrid (ES)
(74) Representative: Carpintero Lopez, Francisco

(57) **Abstract**

Present invention refers to a method for improving a messaging service in a communications network. The method comprises the steps of: a group of users of the messaging service establishing a message conversation; including a unique message identifier to each message of the message conversation; a first user of the group of users, using a communication device, creating a first message to be sent to the group of users as a reply to a previously received message from the message conversation; and encoding the unique message identifier, referring to the previously received message, into the message of the first user.

## Description

### TECHNICAL FIELD OF THE INVENTION

Present invention generally relates to communication services and more specifically relates to messaging services where two or more users exchange messages and replies during a messaging conversation.

### BACKGROUND OF THE INVENTION

Nowadays, messaging services are broad spread across the whole world and millions of users are involved in messaging conversation every day. Messaging services allow people to communicate with each other and they are commonly used over the Internet.

There are several applications offering messaging services with different features. For example "Instant messaging applications" (IM) are a type of online chats which offers real-time text transmission over the Internet. Users may then be involved in simultaneous conversations or even in group conversations. Some familiar instant messaging applications are *WhatsApp Messenger, Yahoo Messenger, Google Hangouts, Viber* etc... but there are many other online chat applications in the market.

As users may have 1:1 instant messaging chats or 1:N instant messaging group chats, they are often getting several messages from other participants before they respond. This often leads to misunderstandings between users and may clutter the conversation with uncorrelated question and answers.

Prior art offer some solutions for email threads, which email applications, such as Microsoft Outlook and Gmail, use to enable users to group messages by conversations. In the case of email, users have the ability to indicate to which specific messages they reply to, but it is not the case for other messaging services as for example instant messaging.. In this latter case, users are used to type messages in a text input field, without any means to map the message being typed with any of the received messages.

Prior art is then missing a solution to this problem, where users of an instant messaging service may sometimes find isolated messages in a chat conversation. A method to associate messages with replies either manually by the user or by means of a smart automatic mechanism would be a valuable contribution.

### SUMMARY OF THE INVENTION

Present invention solves the aforementioned problems of associating messages and replies of different users in a message conversation by presenting a method for improving a messaging service in a communications network. The method comprises the steps of:
a) a group of users of the messaging service establishing a message conversation;
b) including a unique message identifier to each message of the message conversation;
c) a first user of the group of users, using a communication device, creating a first message to be sent to the group of users as a reply to a previously received message from the message conversation;
d) encoding the unique message identifier, referring to the previously received message, into the message of the first user.

Additionally, in one embodiment of the invention wherein a message includes a unique message identifier of another message, a visual indication is displayed in the communication devices of the group of users indicating to which message is replying. This helps users to understand, which message another user replied to by the visual indication associating messages and replies.

Present invention may further comprise, according to one embodiment of the invention, the step of determining which previous message is replying the first message to, by the first user manually selecting one message of the message conversation. The user can just select a message that he already received and indicate that he replies to that specific message. This avoids any possible confusion caused by simultaneous messages.

According to one particular embodiment, present invention may further comprise the step of determining which previous message is replying the first user to, by automatically selecting the last message received by the first user at the time said first user starts creating the first message.

According to one particular embodiment, present invention may further comprise the step of determining which previous message is replying the first user to, by automatically selecting the last message received by the first user at the time said first user finishes creating the first message.

According to one particular embodiment, present invention may further comprise the step of determining which previous message is replying the first user to, by automatically selecting the last message received by the first user at the time said first user sends the first message.

Optionally, a user may change the unique message identifier included in the first message by a second unique message identifier. This allows rectifying any possible mistake and avoiding misunderstandings.

Visual indications may be hidden after a certain period of time according to one embodiment of the invention. Many simultaneous visual indications associating each message of the conversation with each reply may clutter up the conversation. Thus, hiding the visual indication after a configurable period of time helps to makes easier understanding of the conversation. Once a visual indication has been hidden, a user may select a message from the message conversation to display said visual indication again in the communication device of a user of a group of users.

Visual indications may be hidden after sending and/or receiving a certain number of messages according to one embodiment of the invention. Hiding the visual indication after a configurable number of messages sent and/or received helps to makes easier understanding of the conversation. Once a visual indication has been hidden, a user may select a message from the message conversation to display said visual indication again in the communication device of a user of a group of users.

According to one embodiment of the invention, the unique message identifier of each message and the unique message identifier of the message which the user is replying are filed in different fields.

A second aspect of the invention refers to a system for improving a messaging service in a communications network. The system comprises:
- means for establishing a message conversation between two or more users;
- means for including a unique message identifier to each message of the message conversation;
- means for creating a first message to be sent to the group of users as a reply to a previously received message from the message conversation;
- means for encoding the unique message identifier, referring to the previously received message, into the first message.

In one particular embodiment, present invention may further comprise means for displaying a visual indication, indicating to which message is replying a message that includes a unique message identifier of another message.

Another aspect of the invention refers to a mobile device for improving a messaging service in a communications network, the mobile device is configured for:
- establishing a message conversation with other users of the messaging service;
- including a unique message identifier to each message of the message conversation;
- sending a first message to the group of users as a reply to a previously received message from the message conversation;
- encoding the unique message identifier of the previously received message, into the first message.

In one embodiment of the invention, the mobile device may be further configured for displaying a visual indication indicating which previous message the first message is replying to.

A final aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows one embodiment of the invention, where an automatic association between messages and replies are carried out.
**Figure 2****.-** shows the next steps according to the same embodiment of figure 1. That is the communication between Alice and Bob via the Instant Messaging Service.
**Figure 3****.-** shows the next steps according to the same embodiment of figures 1,2.
New messages are created by Alice while Bob is still creating a response.
**Figure 4****.-** shows the next steps according to the same embodiment of figures 1, 2, 3. Bob finishes his response.
**Figure 5****.-** shows the next steps according to the same embodiment of figures 1, 2, 3, 4. The response is sent to Alice, being the response associated to a first message.
**Figure 6****.-** shows another embodiment of the invention where the user explicitly indicates that he is replying to a specific message.
**Figure 7****.-** shows a message exchange between two users, according to the same embodiment of figure 6.
**Figure 8****.-** shows a second user creating a reply to a specific received message, according to the same embodiment of figures 6,7.
**Figure 9****.-** shows a second user creating a reply while a first user continue sending messages, according to the same embodiment of figures 6,7,8.
**Figure 10****.-** shows the second user sending the reply to the specific message, which is displayed on the communication device of the first user, according to the same embodiment of figures 6, 7, 8, 9.
**Figure 11****.-** shows a particular embodiment of the invention where messages and replies are associated by using a same color or fill pattern or other visual indication.
**Figure 12****.-** shows a particular embodiment of the invention where messages and replies are associated by a line or an arrow.
**Figure 13****.-** shows a particular embodiment of the invention where messages and replies are associated by placing an identical visual mark (shape, number...) near the message and the reply.

### DETAILED DESCRIPTION OF THE INVENTION

The invention describes a process for improving message services in a communication network and helping chat participants to understand, which message another user replied to by associating messages and replies. In a detailed description of different embodiments of the invention it will be shown how users are enabled to indicate that they reply to a specific message that they already received and also how this relationship may be visualized by the other users who originally sent that message or to other recipients that received this message.

Messages services may be offered in several ways as instant messaging, email, blogs, SMS messages... but for the sake of clarity, most of the examples refer to instant messages exchanged in a chat. Nevertheless, the same steps can be reproduced over any other message service.

When a user is involved in a conversation based on an exchange of individual messages, and starts to type a response to a message he received, several new messages may arrive before the response was sent. Normally, instant messages exchanged during a conversation are very short messages. So, when a user takes some time to type a longer message he does not realize that other user (or users) may have written new messages.

Users should be able to indicate whether their response messages are associated to an older message and indicating to which specific message they reply to in the conversation.

Determining the specific message can be done in several ways. Some examples are included below according to different embodiments of the present invention:
- Automatic: the message is correlated as a response to the last message that was received at the time that the user started creating the response in the conversation. The response may be created by typing in the screen/keyboard of a communication device, recording a voice message, selecting preconfigured messages or any other way of communication. A conversation is identified by a correspondent, subject, a group, etc.
- Manual: users can explicitly indicate the message they replies to. It can be for example:
   ∘ An older message that was received previously
   ∘ A newer message that was received after they started creating the response.
   ∘ Any message in the conversation that was received after they started typing the response.

Users have the option to change this association or remove it at any time before they sent the response.

According to this detailed description of one embodiment of the invention, each message in the conversation is identified by means of a message identifier ("Message-ID") included it its meta-data. Once the user indicates to which specific message he replies to, "In-Reply-To" header/identifier is added to the response message (as part of its meta-data) to indicate to the other users the original message (identified by its "Message-ID") it is related to.

These fields "Message-ID" and "In-Reply-To" are already defined in prior art. RFC 822 ("Standard for the Format of ARPA Internet Text Messages") defines "Message-ID" header and "In-Reply-To" header. This RFC is commonly used in email services. Namely, "Message-ID" header is a unique identifier of a message in a conversation. It is defined in RFC 822 under section 4.6.1: *"This field contains a unique identifier (the local-part address unit) which refers to THIS version of THIS message. The uniqueness of the message identifier is guaranteed by the host which generates it. This identifier is intended to be machine readable and not necessarily meaningful to humans. A message identifier pertains to exactly one instantiation of a particular message; subsequent revisions to the message should each receive new message identifiers."*
"In-Reply-To" header is also defined in RFC 822 under section 4.6.2: *"The contents of this field identify previous correspondence which this message answers...."*

A pseudo Message structure is:
Header: <Message | etc.>
...
From: <Alice> < Alice's address>
To: <Bob> <Bob's address>
Type: <Message | IM | Text | etc.>
...
**Message-ID: <unique identifier>**
**In-Reply-To: <unique identifier>**
...
Content-Type: <text | image | video | etc.>
Data: <text | url | thumbnail | etc.>
...

Where "Message-ID" header is mandatory and "In-Reply-To" header is optional.

Different methods could be used to indicate an association to the original message, including the following examples, but not limited to:
- Other headers/fields with equivalent meaning to "Message-ID" and "In-Reply-To", but with a different name.
- Indicating a timestamp of the original message as a way to identify the original message to which the reply corresponds.

The specific fields and its encoding used to convey this information is linked to the type of messaging service used, especially if it is a standard protocol (e.g. email) in which these fields may be defined by that standard itself.

There are several options to display the relationship between messages. According to different embodiments of the invention some examples are shown below:
- Coloring source and reply in a different color or other same visual effect, differentiating them from other messages.
- Connecting message and reply with a line or arrow.
- Placing an identical visual mark near message and reply, such as a number or a geometrical form (triangle, circle, etc.) near message and reply.
- Placing the message and reply in frame with an alike pattern structure (dotted line, broken line, etc.)
- Visualizing by changing message order to show original message to be immediately before the reply.

Visual indications can be removed after exchanging a few messages or after a certain period of time in order to reduce cluttering. However, at any time a user can view again the visual indication between messages by selecting any message from the chat timeline. The visual indication appears again.

Detailed flow of particular embodiments of the invention is explained below. It assumed that instant messaging (IM) is a type of online chat which offers real-time text transmission over the Internet. The Instant Messaging Service (1) provides Instant messaging capabilities on the web. Alice (10) and Bob (11) are registered users to the Instant Messaging Service (1) so they can exchange messages or IMs between them using their communication devices and opening a chat via that service. There is an application (App) running in each communication device to provide a proper interface.

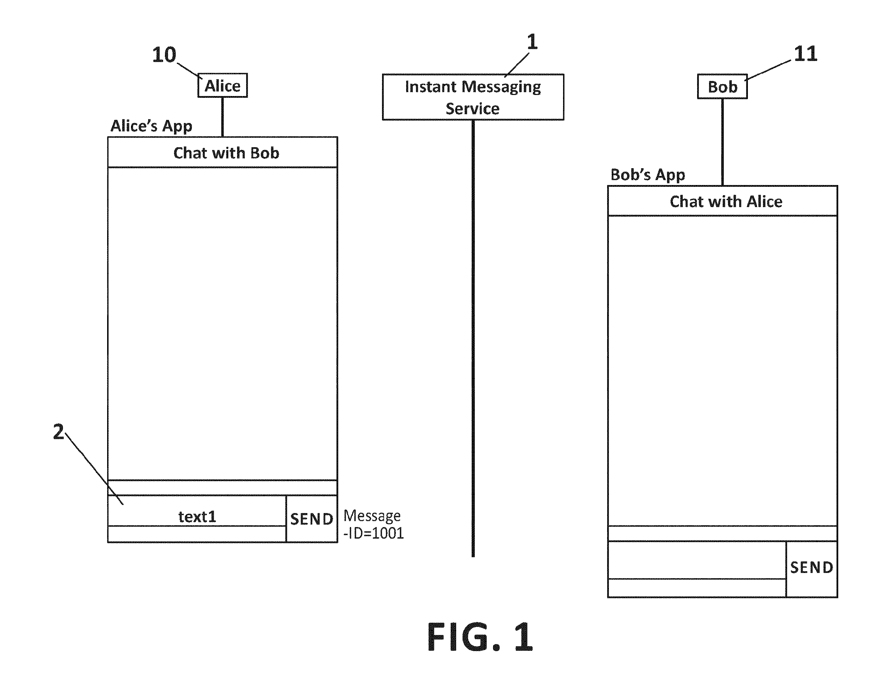

**Figures 1-5** show an automatic association between messages and replies where a new message of a user is deemed to be a response to the last message that was received at the time the user started typing the response in the conversation.

In Figure 1 Alice wants to send an IM to Bob. She starts typing the first IM (2) to Bob. This first IM (2) is identified, for example, as Message-ID=1001.

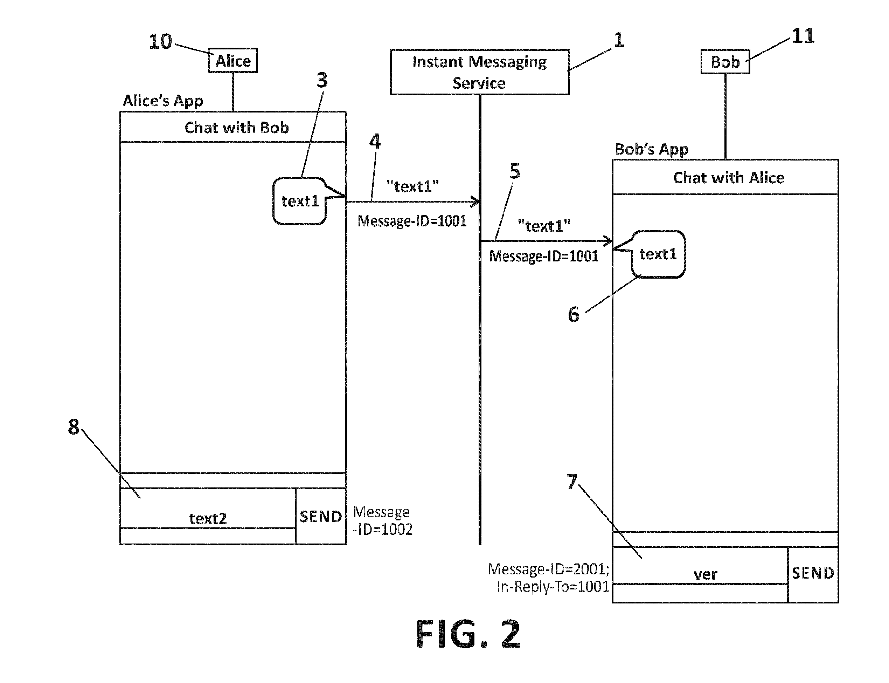

Figure 2 shows the first IM (2), Message-ID=1001, displayed (3) on Alice's App. Then, it is sent (4) to Bob via the Instant Messaging Service (1).
The Instant Messaging Service (1) forwards (5) the first IM (2) to Bob and the message is displayed (6) on Bob's App.
Bob starts typing his response IM (7), identified for example as Message-ID=2001. In this embodiment, it is automatically associated to last received IM (Message-ID=1001) and the field "In-Reply-To" is filled with the unique message identifier of the last received IM. It is obtained In-Reply-To=1001, which is added to Bob response.

In the meanwhile, Alice is typing a second IM (8) to Bob; it is identified for example as Message-ID=1002.

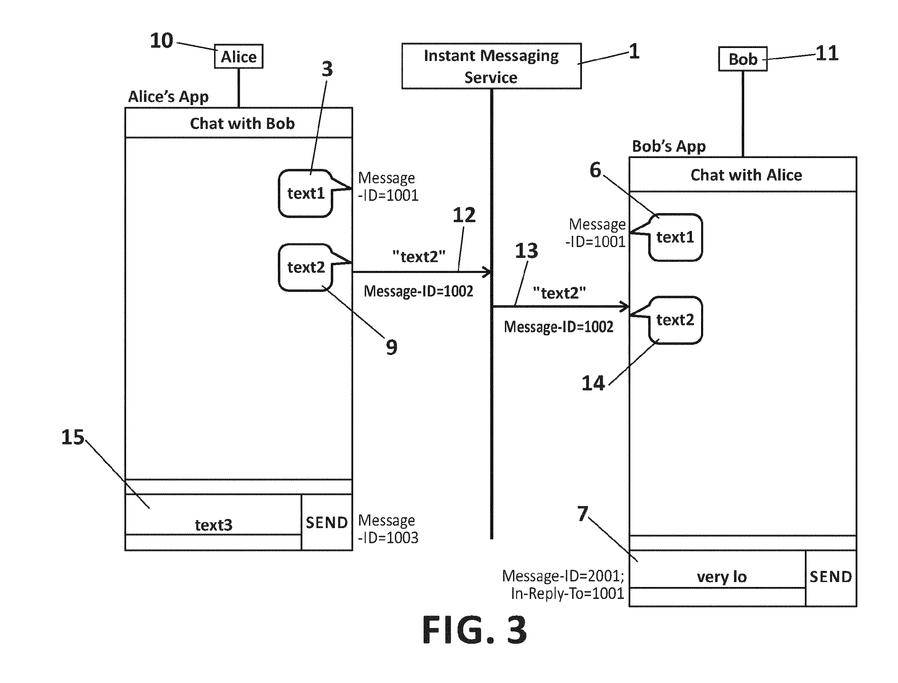

Figure 3 shows the second IM (8), Message-ID=1002, displayed (9) on Alice's App as well. Alice sends (12) the second IM to Bob via the Instant Messaging Service (1). The Instant Messaging Service forwards (13) the second IM to Bob; the message is displayed (14) on Bob's App. Bob is still typing his response (7) and Alice is already typing a third IM (15) to Bob, identified as Message-ID=1003.

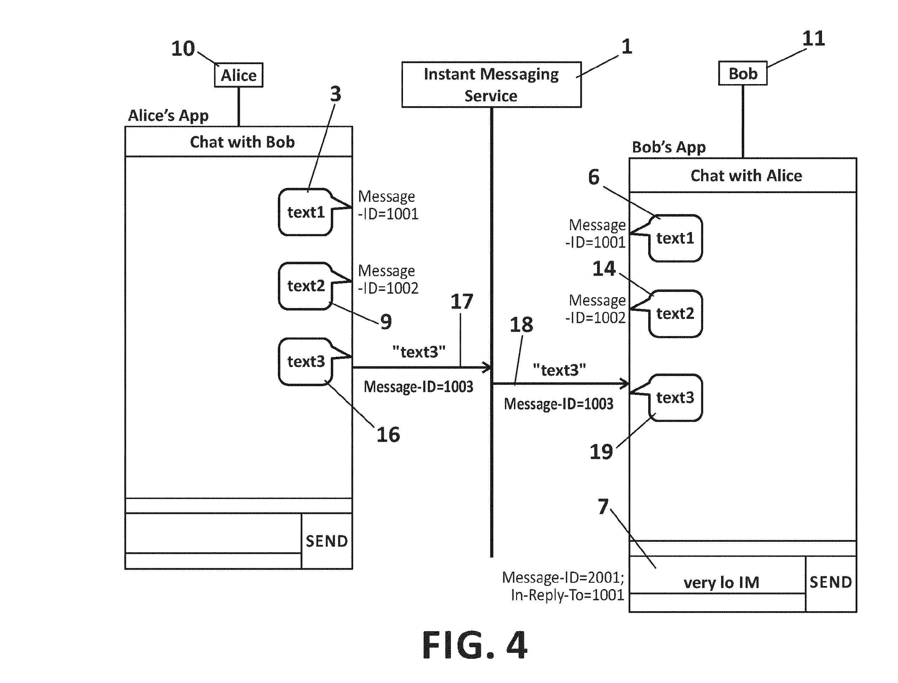

Figure 4 shows the third IM (15), Message-ID=1003, displayed (16) on Alice's chat timeline. Alice sends (17) the third IM to Bob via the Instant Messaging Service (1). The Instant Messaging Service forwards (18) the third IM (15) to Bob and the message is displayed (19) on Bob's chat timeline as well. Bob finishes typing his response IM (7), Message-ID=2001;In-Reply-To=1001.

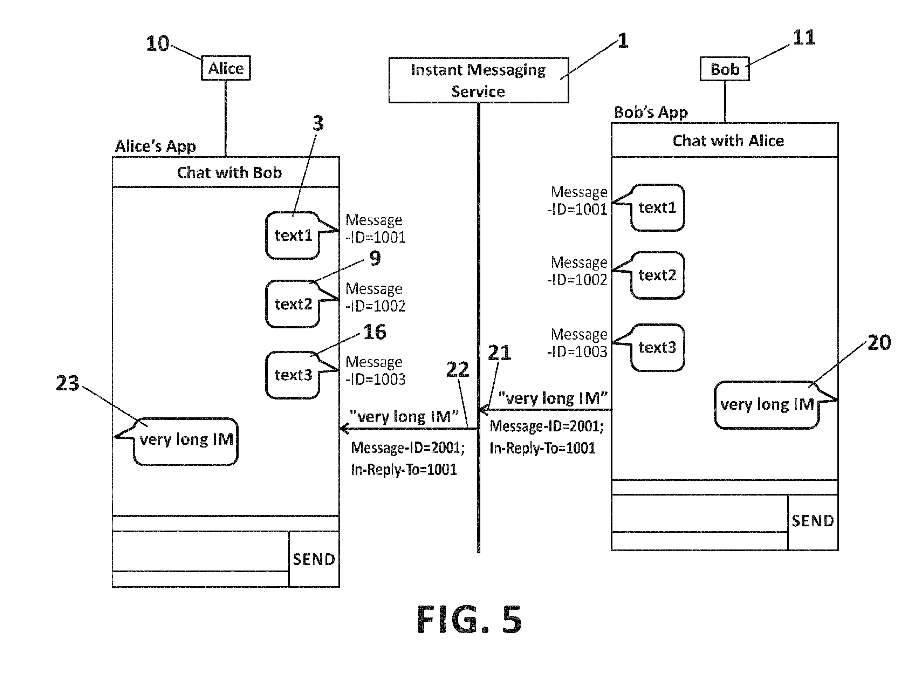

Figure 5 shows the response IM (7), identified as Message-ID=2001; In-Reply-To=1001, is displayed (20) on Bob's App. The response IM (7) is sent (21) to Alice via the Instant Messaging Service (1). The Instant Messaging Service (1) forwards (22) the response IM (7) to Alice and the message is displayed (23) on Alice's App.

Since response IM (7), Message-ID=2001, contains "In-Reply-To" header, which correlates Message-ID=2001 to Message-ID=1001, the relationship between those two messages is displayed to both Alice and Bob with a visual effect.

There are several options for implementing the visual effect. Some examples of different embodiments are included further down in the present description showing different visual associations/indications.

This scenario provides additional information to both users (Alice and Bob) with regards to usual behavior in the state-of-the-art in which the messages are ordered in both ends by submission and/or reception timestamp, without any indication to the last message that was received when the user started to write a response, which is probably the one that the user is intending to respond.

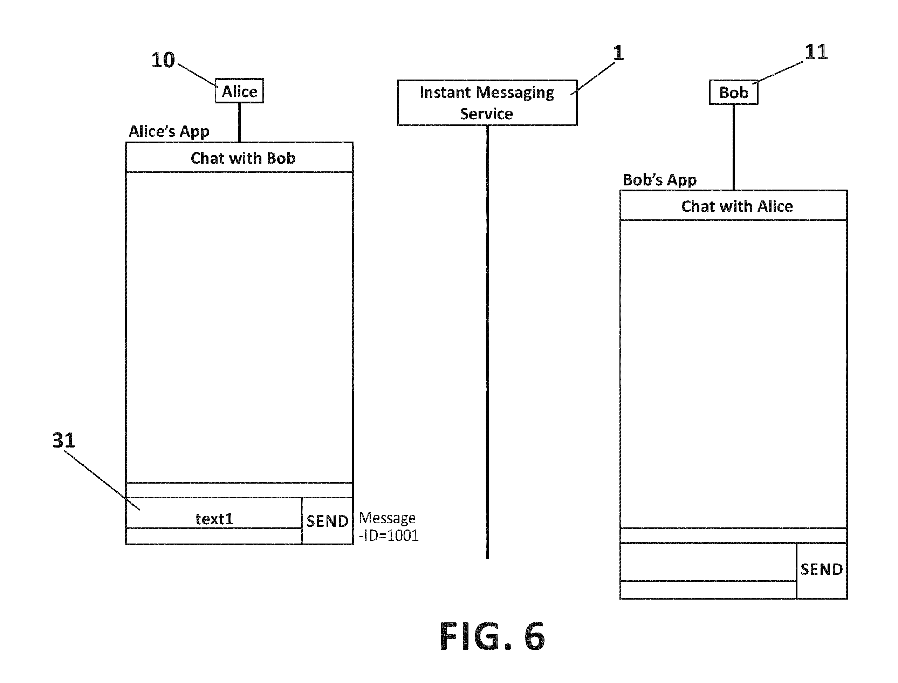

**Figures 6-10** show an embodiment of the present invention where it is allowed overriding a default behavior (for example associating a response with the last message that was received at the time the user start typing the response) by letting the user indicate that he is replying to a different received message as it is disclosed below. In this case, Bob explicitly indicates the message he replies to.

In figure 6, Alice wants to send a first IM (31) to Bob, so she starts typing the first IM (31); this first IM (31) is identified for example as Message-ID=1001.

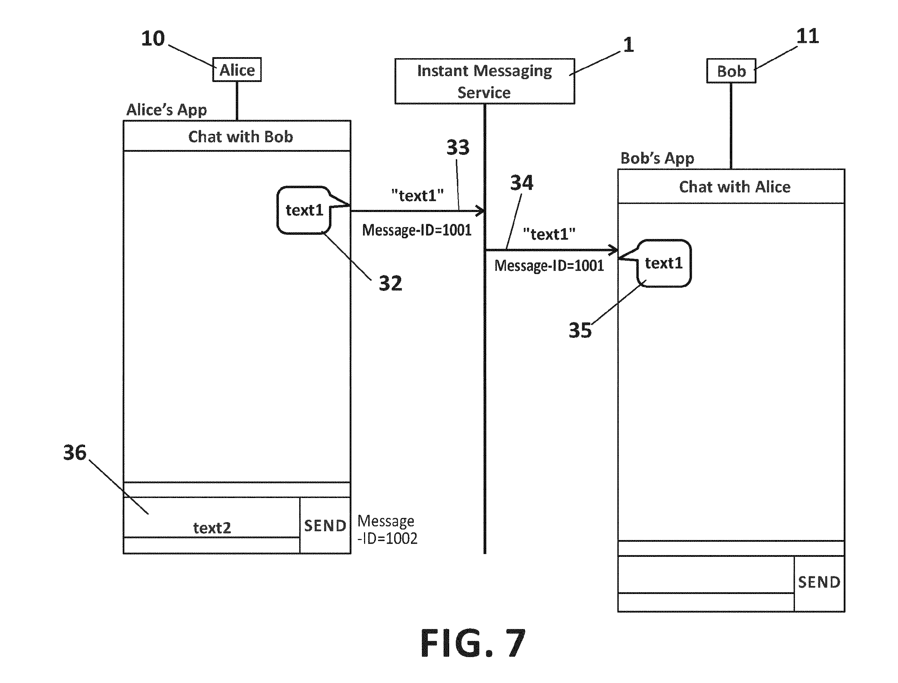

In figure 7, the first IM (31) is displayed (32) on Alice's App. The first IM (31), Message-ID=1001, is sent (33) to Bob via the Instant Messaging Service (1). The Instant Messaging Service forwards (34) the first IM (31) to Bob and the message is displayed (35) on Bob's App. Alice types a second IM (36) to Bob; it is identified for example as Message-ID=1002.

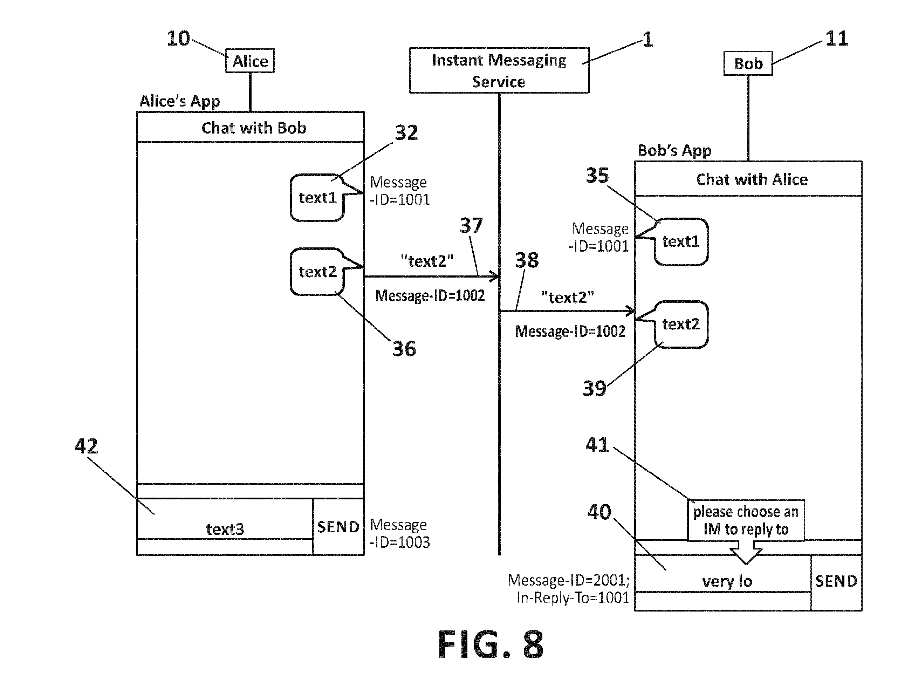

In figure 8, the second IM (36) is displayed on Alice's App. The second IM (36), Message-ID=1002, is sent (37) to Bob via the Instant Messaging Service (1). The Instant Messaging Service forwards (38) the second IM (36) to Bob. The second IM is displayed (39) on Bob's App. Bob wants to send a response IM (40). He is prompted (41) to choose to which message to respond to, as there are already two messages in his timeline. Bob chooses to correlate his response to the first IM (32) he received. Then, Bob start typing his response IM (40), which is identified as Message-ID=2001. It is correlated to IM identified as Message-ID=1001, so the unique message identifier In-Reply-To=1001 is added to it.
In the case that Bob does not choose a specific message in his timeline to which he is responding, according to one embodiment of the invention, the response is automatically correlated with one of the messages (following a predefined policy). For instance, the message may be automatically correlated to the last message that was received when Bob started typing, or to the last message that was received when Bob finished typing the message, or to the last message that was received when Bob sent the message.

In the meanwhile, Alice is already typing a third IM (42) to Bob, identified for example as Message-ID=1003.

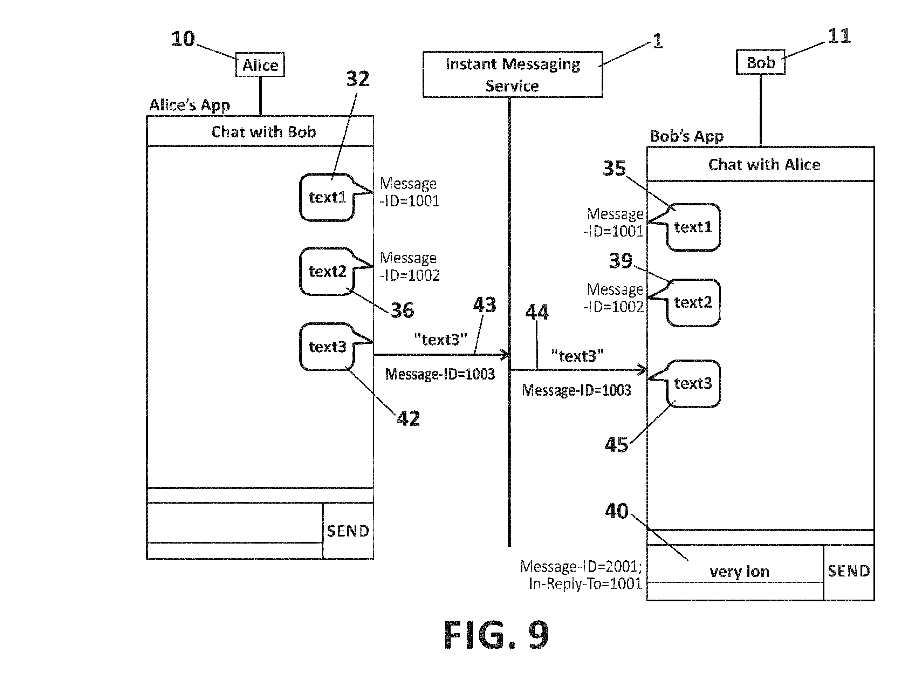

In figure 9, the third IM (42), Message-ID=1003, is displayed on Alice's chat timeline. The third IM (42), Message-ID=1003, is sent (43) to Bob via the Instant Messaging Service (1). The Instant Messaging Service forwards (44) the third IM (42) to Bob and the message is displayed (45) on Bob's chat timeline as well, while Bob finish typing his response IM (40), Message-ID=2001; In-Reply-To=1001.

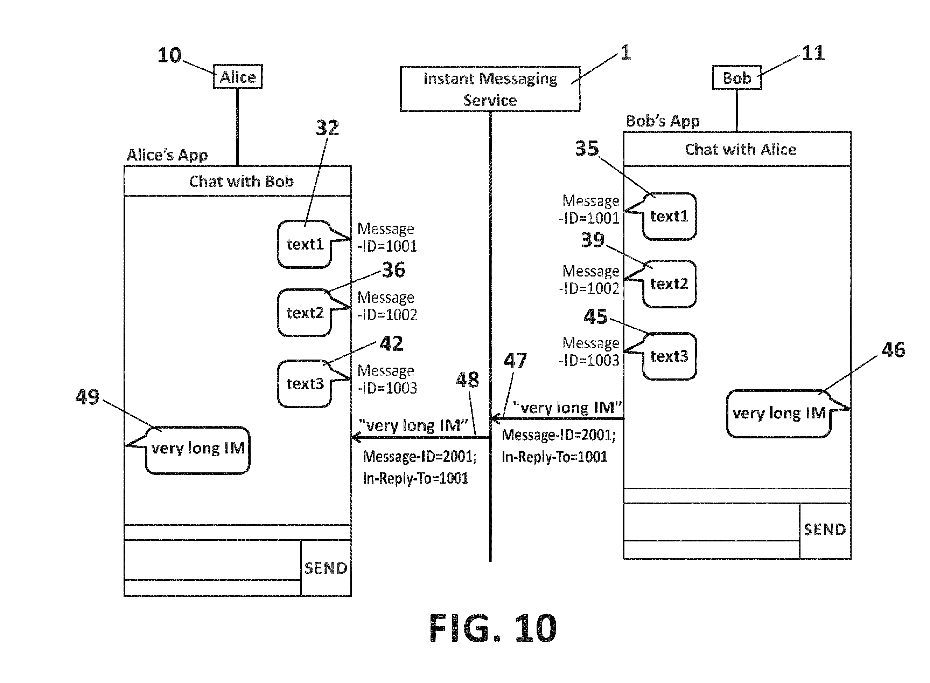

In figure 10 the response IM (40), identified as Message-ID=2001; In-Reply-To=1001, is displayed (46) on Bob's App. The response IM (40) is sent (47) to Alice via the Instant Message Service (1). The Instant Messaging Service forwards (48) the response IM (40) to Alice and the message is displayed (49) on Alice's App.

Since response IM (40), with "Message-ID=2001, contains "In-Reply-To" header which correlates Message-ID=2001 to Message-ID=1001, the relationship between those two messages is displayed to both user with a visual effect. There are several options for implementing the visual effect. Some examples of different embodiments are included below:

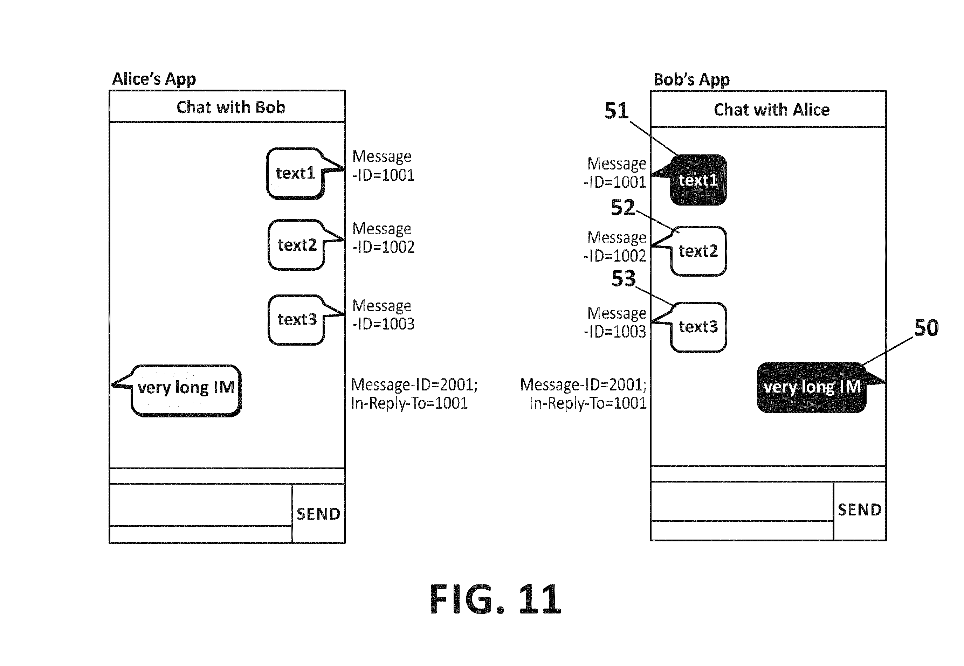

In figure 11, for example, it is shown an embodiment of the present invention, where visual indications, associating a message and a response, are coloring source and reply in a different color or other same visual effect. Namely, in this embodiment Bob has written a very long IM (50) as a response to a previously received first message (51) from Alice. In the meanwhile, Alice has written two messages (52,53), which have been displayed on Bob's communication device, so colouring the response (50) and the source (51) with a same color (and different color from the rest of messages) makes the association clear. One alternative is providing a different fill pattern, borderline or other visual indication.

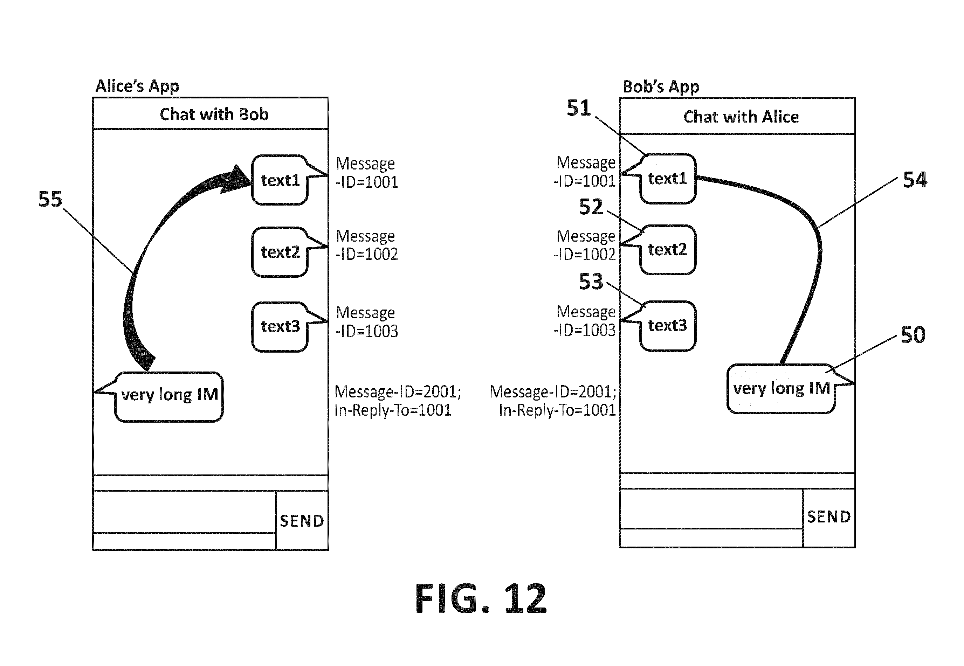

In figure 12, it shown another embodiment of the present invention, where visual indications are chosen to connect messages and replies with a line or an arrow. The example is very similar to the previous one, where Alice is sending messages while Bob is creating a very long response (50) to the first message (51). A line (54) associating the first message (51) with the response (50) is displayed on the communication devices. One alternative is providing an arrow (55) instead of a line.

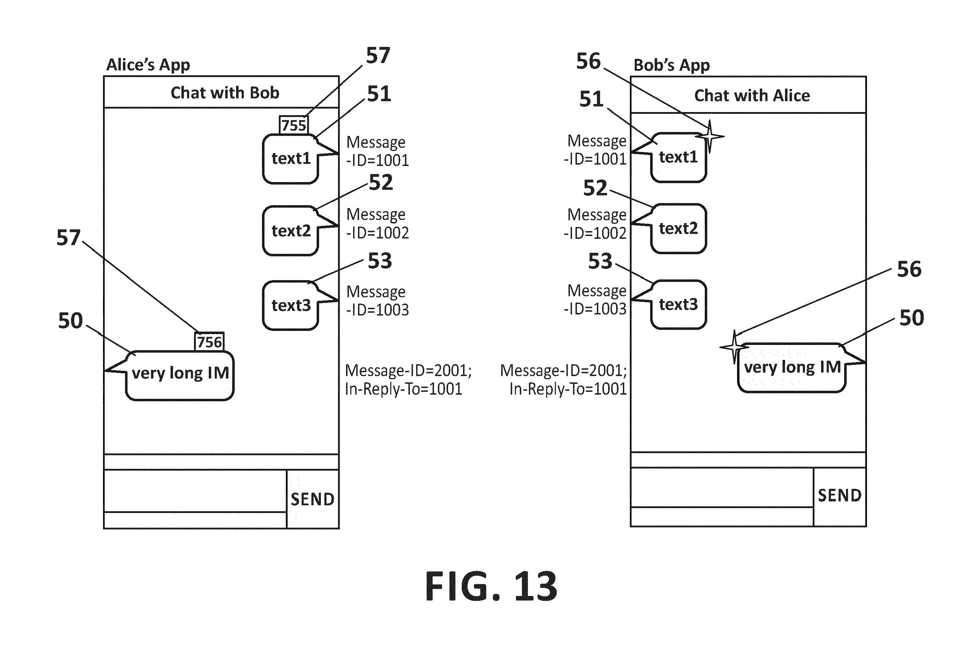

In figure 13, it is shown another embodiment of the present invention, where visual indications are placed near messages and replies, being identical visual marks associated to a messages and the reply. For example, the first message (51) and the long response (50) are associated by a star (56) placed near them. Any other figure with identical shape could be used with the same effect. One alternative is shown on Alice's communication device, where a number (57) is used to associate the first message (51) with the long response (50).

Some embodiments of the invention comprise removing the visual indication after some time or after exchanging a few messages in order to reduce cluttering. There are different alternatives to achieve this according to different embodiments of the invention, for example:
- Showing a configurable number of maximum correlated messages (assigning a default number of, for example, 3 messages).
- Allowing users to explicitly remove any shown association.
- Assigning a configurable period of time to every visual indication. After expiry of the period (for example, a default period of time may be 30 seconds) the visual indication disappear.
- User can view again the association between the messages at any time by choosing any message from the timeline. The visual indications will appear again for the configurable period and then disappear or will disappear as soon as the user chooses a different message in order to get its visual correlation.

Present invention has an edge over prior art since users are allowed to decide to which message they are replying. In the case users do not explicitly select any message, there is still an option to automatically select one of the messages (kind of default selection), a beaviour that can be determined according to a predefined policy.

## Claims

1. Method for improving a messaging service in a communications network, the method is **characterized by** comprising the steps of:
a) a group of users of the messaging service establishing a message conversation;
b) including a unique message identifier to each message of the message conversation;
c) a first user of the group of users, using a communication device, creating a first message to be sent to the group of users as a reply to a previously received message from the message conversation;
d) encoding the unique message identifier, referring to the previously received message, into the message of the first user.

2. Method according to claim 1, wherein a message including a unique message identifier of another message, further comprising displaying a visual indication in the communication devices of the group of users indicating to which message is replying.

3. Method according to any one of previous claims, further comprising the step of determining which previous message is replying the first message, by the first user manually selecting one message of the message conversation.

4. Method according to any one of previous claims 1 or 2, further comprising the step of determining which previous message is replying the first user, by automatically selecting the last message received by the first user at the time said first user starts creating the first message.

5. Method according to any one of previous claims 1 or 2, further comprising the step of determining which previous message is replying the first user, by automatically selecting the last message received by the first user at the time said first user finishes creating the first message.

6. Method according to any one of previous claims 1 or 2, further comprising the step of determining which previous message is replying the first user, by automatically selecting the last message received by the first user at the time said first user sends the first message.

7. Method according to any of the previous claims further comprising the user changing the unique message identifier included in the first message and referring to a previously received message by a second unique message identifier referring to a second previously received message.

8. Method according to any one of the claims 2-7 further comprising hiding the visual indication after a certain period of time.

9. Method according to any one of the claims 2-8 further comprising hiding the visual indication after sending and/or receiving a certain number of messages.

10. Method according to any one of claims 8-9 further comprising displaying in the communication device of a user of a group of users, a hidden visual indication upon the user selecting a message from the message conversation.

11. System for improving a messaging service in a communications network, the system is **characterized by** comprising:
- means for establishing a message conversation between two or more users;
- means for including a unique message identifier to each message of the message conversation;
- means for creating a first message to be sent to the group of users as a reply to a previously received message from the message conversation;
- means for encoding the unique message identifier, referring to the previously received message, into the message of the first user.

12. System according to claim 11 further comprising means for displaying a visual indication, indicating to which message is replying a message which includes a unique message identifier of another message.

13. Mobile device for improving a messaging service in a communications network, the mobile device is configured for:
- establishing a message conversation with other users of the messaging service;
- including a unique message identifier to each message of the message conversation;
- sending a first message to the group of users as a reply to a previously received message from the message conversation;
- encoding the unique message identifier of the previously received message, into the first message.

14. Mobile device according to claim 13 wherein the mobile device is further configured for displaying a visual indication indicating to which previous message is replying the first message.

15. A computer program product comprising computer program code adapted to perform the method according to any of the claims 1-10 when said program code is executed on a computer, a digital signal processor, a field-programmable gate array, an application-specific integrated circuit, a micro-processor, a micro-controller, or any other form of programmable hardware.
